# EUROPÄISCHE PATENTANMELDUNG

(11) **EP 1 657 942 A1**
(43) Veröffentlichungstag der Anmeldung: **17.05.2006**
(21) Anmeldenummer: 04026928.4
(22) Anmeldetag: 12.11.2004
(51) Int. Cl.: H04Q 7/38, H04Q 7/20, H04L 12/28

(54) **Verfahren und Vorrichtung zur Unterstützung eines Handovers zwischen einer mobilen und einer stationären Funkstation eines Netzwerkes**

(71) Anmelder: SIEMENS AKTIENGESELLSCHAFT, 80333 München (DE)
(72) Erfinder: Breuer, Volker, 16727 Bötzow (DE); Lamprecht, Frank, 10439 Berlin (DE); Ulrich, Thomas, 67098 Bad Dürkheim (DE); Vesely, Alexander, 1170 Wien (AT)

(57) **Zusammenfassung**

Die Erfindung betrifft ein Verfahren zur Kommunikation per Funk, bei dem eine netzseitige Funkstation (BS_TRAIN) an einer Transport-Einrichtung (TRAIN) angebracht ist und mit sich innerhalb der Transport-Einrichtung (TRAIN) befindlichen teilnehmerseitigen Funkstationen (MS_TRAIN) kommuniziert. Erfindungsgemäß strahlt die netzseitige Funkstation (BS_TRAIN) Informationen über andere netzseitige Funkstationen (BS_STATION) und/oder Funkzellen aus bei Zutreffen von einem Kriterium hinsichtlich mindestens einem sich mit der Zeit ändernden Zustand der Transport-Einrichtung (TRAIN) und/oder hinsichtlich der Zeit. Weiterhin betrifft die Erfindung ein Verfahren, bei dem eine andere netzseitige Funkstation (BS_STATION) Informationen über die an der Transport-Einrichtung (TRAIN) angebrachte netzseitige Funkstation (BS_TRAIN) oder deren Funkzelle ausstrahlt bei Zutreffen von einem Kriterium hinsichtlich mindestens einem sich mit der Zeit ändernden Zustand der Transport-Einrichtung (TRAIN) und/oder hinsichtlich der Zeit.

## Beschreibung

Verfahren und netzseitige Funkstationen zur Unterstützung eines Handovers zwischen mobiler und stationärer netzseitiger Funkstation

Die Erfindung betrifft Verfahren zur Kommunikation per Funk, wobei eine netzseitige Funkstation an einer Transport-Einrichtung angebracht ist und mit sich innerhalb der Transport-Einrichtung befindlichen teilnehmerseitigen Funkstationen kommuniziert. Weiterhin betrifft die Erfindung netzseitige Einrichtungen zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige teilnehmerseitige Funkstationen oder netzseitige Funkstationen wie Repeater, Funkzugangspunkte oder Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet.

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von beispielsweise einigen hundert Metern im Vergleich zu üblichen Mobilfunkzellen klein. Beispiele verschiedener Standards für WLANs sind HiperLAN, DECT, IEEE 802.11, Bluetooth und WATM.

In der Regel handelt es sich bei den netzseitigen Funkstationen um stationäre, d.h. ortsfeste, Funkstationen. So werden beispielsweise Insassen eines Zuges üblicherweise durch stationäre netzseitige Funkstationen versorgt, welche entlang den Gleisen installiert sind. Es sind jedoch auch mobile netzseitige Funkstationen an Bord von Flugzeugen bekannt, so dass die Passagiere des Flugzeuges mit der im Flugzeug installierten netzseitigen Funkstation kommunizieren, welche die Signale an eine Satellitenfunkstation weiterleiten kann.

Der Erfindung liegt die Aufgabe zugrunde, effiziente Verfahren zur Kommunikation per Funk aufzuzeigen, bei welchen eine netzseitige Funkstation an einer Transport-Einrichtung angebracht ist. Weiterhin sollen Einrichtungen zur Durchführung des Verfahrens aufgezeigt werden.

Diese Aufgabe wird durch Verfahren mit den Merkmalen der Ansprüche 1 und 2 gelöst, sowie durch netzseitige Einrichtungen mit den Merkmalen von nebengeordneten Ansprüchen. Vorteilhafte Ausgestaltungen und Weiterbildungen sind Gegenstand von Unteransprüchen.

Bei dem ersten Verfahren zur Kommunikation per Funk kommuniziert eine netzseitige Funkstation, welche an einer Transport-Einrichtung angebracht ist, mit sich innerhalb der Transport-Einrichtung befindlichen teilnehmerseitigen Funkstationen. Erfindungsgemäß strahlt die netzseitige Funkstation Informationen über andere netzseitige Funkstation und/oder Funkzellen aus bei Zutreffen von einem Kriterium hinsichtlich mindestens einem sich mit der Zeit ändernden Zustand der Transport-Einrichtung und/oder hinsichtlich der Zeit. Sie strahlt die Informationen nicht aus bei Nicht-Zutreffen des Kriteriums.

Bei dem zweiten Verfahren zur Kommunikation per Funk kommuniziert eine netzseitige Funkstation mit teilnehmerseitigen Funkstationen. Erfindungsgemäß strahlt sie Informationen über eine an einer Transport-Einrichtung angebrachte netzseitige Funkstation aus bei Zutreffen von einem Kriterium hinsichtlich mindestens einem sich mit der Zeit ändernden Zustand der Transport-Einrichtung und/oder hinsichtlich der Zeit. Sie strahlt die Informationen nicht aus bei Nicht-Zutreffen des Kriteriums.

Eine netzseitige Funkstation kommt zum Einsatz, welche an einer Transport-Einrichtung angebracht ist. Die Anbringung kann auf verschiedene Weise erfolgen, entscheidend ist, dass sich die netzseitige Funkstation in dem Fall, dass sich die Transport-Einrichtung fortbewegt, mitbewegt. Die Transport-Einrichtung kann teilnehmerseitige Funkstationen fassen, es kann sich z.B. um ein Schienenfahrzeug, Schiff, Flugzeug oder Straßenfahrzeug handeln.

Es wird ein Kriterium eingesetzt, welches darüber entscheidet, ob eine netzseitige Funkstation Informationen über eine oder mehrere andere netzseitige Funkstationen bzw. die jeweilige(n) Funkzelle(n) ausstrahlt oder nicht. Das Kriterium entscheidet daher über das "Anschalten" und "Abschalten" der Informationsausstrahlung über andere netzseitige Funkstationen/Funkzellen. Somit existieren erste Zeitspannen, während welchen das Kriterium erfüllt ist und die netzseitige Funkstation somit die Informationen ausstrahlt, und zweite Zeitspannen, während welchen das Kriterium nicht erfüllt ist und die netzseitige Funkstation somit die Informationen nicht ausstrahlt. In den ersten Zeitspannen müssen die Informationen nicht ununterbrochen ausgestrahlt werden. So ist es vorteilhaft, dass dann, wenn das Kriterium hinsichtlich des Zustandes und/der der Zeit erfüllt ist, eine mehrmalige Ausstrahlung erfolgt, z.B. periodisch zu für diese Zwecke vorgesehenen Zeitpunkten oder Zeitschlitzen. In den zweiten Zeitspannen kann zu diesen Zeitpunkten oder Zeitschlitzen dann nichts oder andere Inhalte ausgestrahlt werden.

Betrifft das Kriterium die Zeit, so kann es lauten, dass die Informationen ab einem bestimmten Zeitpunkt auszustrahlen oder nicht auszustrahlen sind, bzw. während einer bestimmten Zeitspanne auszustrahlen sind. Betrifft es Zustände der Transport-Einrichtung, so kann es einen einzelnen Zustand oder auch eine Kombination mehrerer Zustände beinhalten.

Bei den Informationen kann es sich z.B. um Identifikationsinformationen von anderen netzseitigen Funkstationen/Funkzellen handeln, um Funkfrequenzen und/oder andere Angabe bezüglich physikalischer Kanäle der anderen netzseitigen Funkstationen/Funkzellen.

Vorzugsweise handelt es sich bei einem sich mit der Zeit ändernden Zustand der Transport-Einrichtung um den aktuellen Aufenthaltsort der Transport-Einrichtung. Zusätzlich oder alternativ kann es sich bei einem sich mit der Zeit ändernden Zustand der Transport-Einrichtung um den Bewegungszustand der Transport-Einrichtung handeln, wie z.B. ob sich die Transport-Einrichtung bewegt oder stillsteht, in welche Richtung sich die Transport-Einrichtung bewegt, mit welcher Geschwindigkeit sich die Transport-Einrichtung bewegt. Zusätzlich oder alternativ kann es sich bei einem sich mit der Zeit ändernden Zustand der Transport-Einrichtung um die Öffnung von mindestens einem Ein- und/oder Ausgang der Transport-Einrichtung handeln. Die Ein- und/oder Ausgänge können hierbei unterschiedlich ausgestaltet sein, wesentlich ist, dass eine Öffnung dazu führt, dass sich die Anzahl an teilnehmerseitigen Funkstationen innerhalb der Transport-Einrichtung ändern kann.

In Weiterbildung der Erfindung hängt der Inhalt der Informationen über andere netzseitige Funkstationen, welche die an der Transport-Einrichtung angebrachte netzseitige Funkstation ausstrahlt, von dem aktuellen Aufenthaltsort der Transport-Einrichtung ab. Somit kann z.B. bei dem Kriterium des Stillstehens der Transport-Einrichtung für die Ausstrahlung der Informationen die an der Transport-Einrichtung angebrachte netzseitige Funkstation bei einem ersten Halt Informationen über eine erste netzseitige Funkstation und bei einem zweiten Halt an einem anderen Ort Informationen über eine zweite netzseitige Funkstation ausstrahlen. Vorzugsweise werden jeweils Informationen über diejenige(n) netzseitige(n) Funkstation(en)/Funkzelle(n) ausgestrahlt, welche sich in der Nähe des aktuellen Aufenthaltsorts der Transport-Einrichtung befinden.

Einer Ausgestaltung der Erfindung gemäß fordert die netzseitige Funkstation, welche die Informationen ausstrahlt, teilnehmerseitige Funkstationen auf, Messungen an Funkressourcen der durch die Informationen indizierten netzseitigen Funkstation(en)/Funkzelle(n) durchzuführen. Diese Aufforderung kann zusammen mit den Informationen oder auch separat erfolgen. Sie kann explizit sein, oder auch implizit, so dass den teilnehmerseitigen Funkstationen lediglich durch den Empfang der Informationen bewusst ist, dass die Messungen durchzuführen sind.

Vorteilhaft ist es, wenn die ausgestrahlten Informationen in einer von netzseitigen Funkstationen üblicherweise zu Zellwechsel-Zwecken ausgestrahlten Nachbarzell-Liste enthalten sind. Hierbei handelt es sich um eine Liste, welche von netzseitigen Funkstationen unabhängig von der Erfindung ausgestrahlt werden kann und die Vorbereitung oder Durchführung von Zellwechsel-Vorgängen unterstützt. Bei einem Zellwechsel kann es sich z.B. um ein netzseitig gesteuertes Handover handeln, oder auch um einen autonomen Zellwechsel einer Teilnehmerstation, wie z.B. ein "cell re-selection".

Eine erste netzseitige Einrichtung für ein Funkkommunikationssystem umfasst eine Funkeinrichtung, welche an einer Transport-Einrichtung angebracht ist, mit Mitteln zum Kommunizieren mit sich innerhalb der Transport-Einrichtung befindlichen teilnehmerseitigen Funkstationen. Erfindungsgemäß sind Mittel vorhanden zum Überprüfen, ob ein Kriterium hinsichtlich mindestens einem sich mit der Zeit ändernden Zustand der Transport-Einrichtung und/oder hinsichtlich der Zeit erfüllt ist, und Mittel zum Ausstrahlen von Informationen über andere netzseitige Funkstationen und/oder Funkzellen unter der Voraussetzung, dass das Kriterium erfüllt ist.

Eine zweite netzseitige Einrichtung für ein Funkkommunikationssystem umfasst eine Funkeinrichtung mit Mitteln zum Kommunizieren mit teilnehmerseitigen Funkstationen. Erfindungsgemäß sind Mittel vorhanden zum Überprüfen, ob ein Kriterium hinsichtlich mindestens einem sich mit der Zeit ändernden Zustand einer Transport-Einrichtung und/oder hinsichtlich der Zeit erfüllt ist, und Mittel zum Ausstrahlen von Informationen über eine an der Transport-Einrichtung angebrachte netzseitige Funkstation oder deren Funkzelle unter der Voraussetzung, dass das Kriterium erfüllt ist.

Die beiden netzseitigen Einrichtungen können durch mehrere miteinander verbundene Einrichtungen realisiert sein, so z.B. durch eine Einrichtung, welche darüber entscheidet, ob die Informationen auszustrahlen sind oder nicht, und die Funkeinrichtung, welche die Informationen ausstrahlt. Es ist jedoch auch möglich, dass in der Funkeinrichtung die Entscheidung über die Ausstrahlung getroffen wird, und im Anschluss daran die Ausstrahlung erfolgt oder unterbleibt.

Die beiden netzseitigen Einrichtungen eignen sich insbesondere zum Durchführen des erfindungsgemäßen Verfahrens, wobei dies auch auf die Ausgestaltungen und Weiterbildungen zutreffen kann. Hierzu können sie weitere geeignete Mittel umfassen.

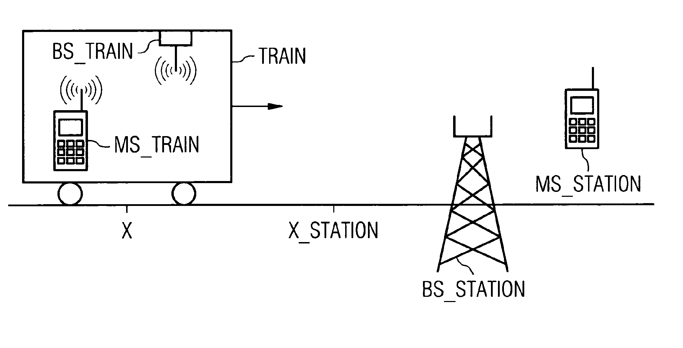

Im folgenden wird die Erfindung anhand eines Ausführungsbeispiels näher erläutert. Dabei zeigt
- Figur 1:: einen Ausschnitt aus einem Funkkommunikationssystem.

Figur 1 zeigt einen Ausschnitt aus einem zellularen Funkkommunikationssystem, wobei es sich z.B. um ein System nach dem Standard UMTS oder GSM handeln kann. In einem Zug TRAIN ist eine Basisstation BS_TRAIN angebracht, welche mit der Teilnehmerstation MS_TRAIN, welche sich in dem Zug TRAIN befindet, kommuniziert. Der Zug befindet sich aktuell am Ort x und bewegt sich auf einen Bahnhof zu. Der Bahnhof ist Bestandteil der Funkzelle einer stationären Basisstation BS_STATION. Weiterhin befindet sich die Teilnehmerstation MS_STATION im Bahnhof.

Die stationären Basisstationen des Funkkommunikationssystems informieren die Teilnehmerstationen über benachbarte Basisstationen bzw. Basisstationen in ihrer Umgebung, so dass die Teilnehmerstationen die Funkfrequenzen dieser Basisstationen ausmessen können. Die Messergebnisse der Teilnehmerstationen können netzseitig zu Handover-Zwecken eingesetzt werden, oder auch zu autonomen Zellwechseln der Teilnehmerstation, in UMTS als "cell re-selection" bezeichnet. Die Informationen über andere Basisstationen werden üblicherweise in Form einer so genannten "neighbour cell list" ausgestrahlt. Die konkrete Ausgestaltung der neighbour cell list hängt vom betrachteten Funkkommunikationssystem ab. So erfolgt in GSM die Angabe der Funkfrequenz, welche von den Teilnehmerstationen abzuhören ist, und einer Identifikationsinformation der Basisstationen (BSIC: Base Station Identity Code). In UMTS erfolgt die Angabe der Funkfrequenz, welche abzuhören ist, einer Identifikationsinformation der Basisstation und weiterer Parameter wie z.B. des scrambling codes der Zelle. Die Informationen der neighbour cell list ermöglichen es den Teilnehmerstationen, zu erkennen oder zu ermitteln, an welchen Funkressourcen Messungen durchzuführen sind.

Diejenigen Teilnehmerstationen, welche aktuell nicht aktiv sind, d.h. welchen keine dedizierten Funkressourcen zur Kommunikation zugewiesen sind, entnehmen die neighbour cell list dem Broadcast-Kanal und vermessen zu bestimmten, ihnen vorgegebenen Zeitpunkten -gemäß DRX (Discontinuous Reception)- die jeweiligen Funkressourcen. Die Teilnehmerstationen, welchen aktuell Funkressourcen zugewiesen sind, empfangen die neighbour cell list über einen dedizierten Kontrollkanal, sie können angewiesen werden, zu bestimmten Zeitspannen, z.B. gemäß dem Compressed Mode, die Funkressourcen von anderen Basisstationen zu vermessen.

Im folgenden wird zur Erläuterung der Erfindung weiterhin der Begriff neighbour cell list verwendet, wobei hierunter Informationen über andere Basisstationen oder Funkzellen verstanden werden, welche insbesondere zu Mess- und/oder Handoverzwecken eingesetzt werden können.

Während sich der Zug TRAIN bewegt, passiert und durchquert er -in Figur 1 nicht dargestellte- stationäre Funkzellen. Ein Handover von der mobilen Basisstation BS_TRAIN zu diesen stationären Basisstationen ist jedoch nicht erwünscht, da die Teilnehmerstationen innerhalb des Zuges TRAIN von der mobilen Basisstation BS_TRAIN versorgt werden. Die Mobilität von Teilnehmerstationen, welche sich innerhalb des bewegten Zuges TRAIN befinden, ist somit nicht erforderlich. Handover während der Fahrt des Zuges zu den stationären Basisstationen haben den Nachteil, dass aufgrund der hohen Geschwindigkeit des Zuges TRAIN eine Vielzahl von Handover-Vorgängen nötigwäre. Überdies würde die Anzahl an Teilnehmerstationen innerhalb einer stationären Funkzelle, welche der Zug TRAIN durchquert, sprunghaft ansteigen und absinken.

Da Handover während der Fahrt des Zuges nicht erwünscht sind, strahlt die mobile Basisstation BS_TRAIN während der Fahrt des Zuges keine neighbour cell list aus. Dies hat den Vorteil, dass die Teilnehmerstationen keine Funkressourcen anderer Basisstationen vermessen müssen. Hierdurch werden die Batterien der Teilnehmerstationen geschont, außerdem kann auf die Zuweisung von Zeitpunkten zur Messung gemäß dem Compressed Mode und die aufwendige Durchführung des Messverfahrens während einer laufenden Kommunikation verzichtet werden. Somit werden keine Ressourcen, weder Funkressourcen noch Batterieressourcen, für Prozeduren, welche bei stationären Basisstationen die Mobilität von Teilnehmern gewährleisten, verbraucht. Die Einsparung von Funkressourcen führt zu einer effektiveren Ausnutzung der Funkressourcen, so dass ein größerer Umfang an Nutzdaten übertragen werden kann.

Ein Handover der Mobilstation MS_TRAIN zu einer anderen Basisstation ist jedoch dann nötig, wenn der Nutzer der Mobilstation MS_TRAIN den Zug TRAIN verlässt. Daher strahlt die mobile Basisstation BS_TRAIN dann, wenn sich der Zug im Bahnhof befindet, die neighbour cell list aus. Als Kriterium dafür, wann eine Ausstrahlung der neighbour cell list erfolgen soll, kann z.B. der Ort der mobilen Basisstation BS_TRAIN verwendet werden. So kann z.B. dann, wenn die mobile Basisstation BS_TRAIN einen bestimmten Ort wie den Ort x_STATION der Figur 1 in der Nähe des Bahnhofes oder den Bahnhof an sich erreicht hat, die Ausstrahlung der neighbour cell list beginnen. Hierzu kann der Zug TRAIN oder die mobile Basisstation BS_TRAIN über ein Ortungssystem verfügen, sowie über einen Speicher, welche diejenigen Orte, welche als Kriterium für das Beginnen oder Beenden der Ausstrahlung der neighbour cell list herangezogen werden, enthält. Durch einen Vergleich des aktuellen über das Ortungssystem bestimmten Ortes mit den gespeicherten Orten kann entschieden werden, ob eine Ausstrahlung der neighbour cell list erfolgen soll oder nicht.

Ein alternatives Kriterium ist der Bewegungszustand des Zuges TRAIN. So kann die neighbour cell list dann ausgestrahlt werden, wenn der Zug zum Stillstand gekommen ist oder einen bestimmten Grenzwert der Geschwindigkeit erreicht hat, während bei Bewegung des Zuges oder bei Überschreiten des Grenzwertes der Geschwindigkeit keine Ausstrahlung der neighbour cell list erfolgt. Weiterhin kann die Öffnung der Türen des Zuges TRAIN als Kriterium für die Ausstrahlung der neighbour cell list verwendet werden: bei geöffneten Türen wird die neighbour cell list ausgestrahlt, bei geschlossenen Türen erfolgt keine Ausstrahlung der neighbour cell list. Schließlich kann auch die Zeit als Kriterium für die Ausstrahlung der neighbour cell list eingesetzt werden: ist der Zeitpunkt der planmäßigen Ankunft des Zuges TRAIN im Bahnhof erreicht, beginnt die Ausstrahlung der neighbour cell list.

Der Inhalt der von der mobilen Basisstation BS_TRAIN ausgestrahlten neighbour cell list hängt von dem Aufenthaltsort der mobilen Basisstation BS_TRAIN ab. So enthält die neighbour cell list, welche von der mobilen Basisstation BS_TRAIN am Bahnhof der Figur 1 ausgestrahlt wird, Informationen über die stationäre Basisstation BS_STATION und gegebenenfalls über weitere stationäre Basisstationen, welche sich in der Nähe befinden. Bei Annäherung oder Eintritt der mobilen Basisstation BS_TRAIN in einen anderen Bahnhof enthält die neighbour cell list dementsprechend Informationen über die jeweiligen an diesem anderen Bahnhof oder in dessen Umgebung vorhandenen Basisstationen. Dies kann z.B. dadurch realisiert werden, dass die mobile Basisstation BS_TRAIN eine Reihe mit neighbour cell lists in Kombination mit einem zugehörigen Aufenthaltsort gespeichert hat, an welchem die jeweilige neighbour cell list auszustrahlen ist. Eine Ortung der mobilen Basisstation BS_TRAIN kann über GPS (Global Positioning System) oder AGPS (Assisted GPS) erfolgen, und bei Übereinstimmung eines GPS-Ortes mit einem gespeicherten Ort wird die jeweilige neighbour cell list zur Ausstrahlung ausgewählt. Zur Ortung können auch andere Verfahren eingesetzt werden, wie z.B. Signalisierungseinrichtungen am Gleis, welche bereits für Bahnzwecke vorhanden sind.

Die Entscheidung darüber, ob die neighbour cell list auszustrahlen ist, kann anstelle der mobilen Basisstation BS_TRAIN auch von einer anderen netzseitigen Einrichtung getroffen werden. So kann die mobile Basisstation BS_TRAIN ihren aktuellen Aufenthaltsort oder Informationen, welche die Bestimmung ihres aktuellen Aufenthaltsortes ermöglichen, an das Infrastrukturnetz senden. Im Infrastrukturnetz erfolgt anhand eines oder mehrerer der oben beschriebenen Kriterien die Entscheidung über die Ausstrahlung der neighbour cell list. Die mobile Basisstation BS_TRAIN wird informiert, wenn die neighbour cell list auszustrahlen ist und wenn die Ausstrahlung der neighbour cell list zu beenden ist.

Für Handover oder "cell re-selection" Zwecke wird in der Regel ein Grenzwert der Empfangsstärke eines Signals einer Basisstation verwendet, welcher überschritten werden muss, bevor eine Basisstation als Handover-Kandidat relevant ist. Dieser Grenzwert kann in Bezug auf die stationäre Basisstation BS_STATION so hoch gesetzt werden, dass eine Überschreitung des Grenzwertes nur von Teilnehmerstationen festgestellt werden kann, welche sich außerhalb des Zuges TRAIN befinden. Hierbei kann die Tatsache ausgenutzt werden, dass die Fenster von Zügen oftmals metallisch verspiegelt sind, was zu einer starken Dämpfung von Funkwellen führt. Dies bedeutet, dass Teilnehmerstationen innerhalb des Zuges TRAIN, welche aufgrund der von der mobilen Basisstation BS_TRAIN ausgestrahlten neighbour cell list die Funkressourcen der stationären Basisstation BS_STATION vermessen, eine niedrige Empfangsleistung messen, welche unter dem Grenzwert liegt. Erst nach oder beim Verlassen des Zuges wird eine höhere Empfangsleistung gemessen, so dass erst nach Verlassen des Zuges ein Handover von der mobilen Basisstation BS_TRAIN zu der stationären Basisstation BS_STATION erfolgen kann.

Die von der mobilen Basisstation BS_TRAIN ausgestrahlte neighbour cell list unterscheidet sich bezüglich ihres Aufbaus und der für die Ausstrahlung verwendeten Funkkanäle nicht von einer von einer stationären Basisstation ausgestrahlten neighbour cell list. D.h. für die Ausstrahlung der neighbour cell list durch die mobile Basisstation BS_TRAIN können die üblicherweise in dem betrachteten Funkkommunikationssystem verwendeten, in der Regel standardisierten, Prozeduren zum Einsatz kommen. Lediglich die Tatsache, ob bzw. zu welchen Zeitspannen eine neighbour cell list von der mobilen Basisstation BS_TRAIN ausgestrahlt wird, wird durch das erfindungsgemäße Verfahren bestimmt.

Die stationäre Basisstation BS_STATION strahlt die neighbour cell list zu den üblicherweise innerhalb des Funkkommunikationssystems hierfür vorgesehenen Zeitpunkten aus. Befindet sich der Zug TRAIN mit der mobilen Basisstation BS_TRAIN im Bahnhof, enthält die von der stationären Basisstation BS_STATION ausgestrahlte neighbour cell list zumindest u.a. Informationen über die mobile Basisstation BS_TRAIN. Als Kriterium dafür, ob die von der stationären Basisstation BS_STATION ausgestrahlte neighbour cell list Informationen über die mobile Basisstation BS_TRAIN enthält oder nicht, können die oben angeführten Kriterien bezüglich der Ausstrahlung der neighbour cell list durch die mobile Basisstation BS_TRAIN verwendet werden, d.h. der Aufenthaltsort der mobilen Basisstation BS_TRAIN, der Bewegungszustand bzw. die Geschwindigkeit der mobilen Basisstation BS_TRAIN, oder auch die Öffnung der Türen der mobilen Basisstation BS_TRAIN. Ein weiteres von der stationären Basisstation BS_STATION verwendbares Kriterium ist die aktuelle Uhrzeit. So können aufgrund der Kenntnis des Fahrplans des Zuges TRAIN Informationen über die mobile Basisstation BS_TRAIN in die neighbour cell list zum Zeitpunkt des planmäßigen Eintreffens oder kurz vor dem planmäßigen Eintreffen aufgenommen werden. Gegebenenfalls können Verspätungen des Zuges TRAIN berücksichtigt werden. Das für die Aufnahme der mobilen Basisstation BS_TRAIN in die neighbour cell list der stationären Basisstation BS_STATION verwendete Kriterium kann gleich oder unterschiedlich zu dem von der mobilen Basisstation BS_TRAIN verwendeten Kriterium sein.

Befindet sich der Zug TRAIN im Bahnhof, so entnimmt die Teilnehmerstation MS_STATION der von der stationären Basisstation BS_STATION ausgestrahlten neighbour cell list Informationen über die mobile Basisstation BS_TRAIN und führt Messungen an den jeweiligen Funkressourcen der mobilen Basisstation BS_TRAIN durch. Auch in Bezug auf den Grenzwert der Empfangsstärke eines Signals der mobilen Basisstation BS_TRAIN gilt, dass dieser so hoch gesetzt wird, dass ein Überschreiten des Grenzwertes nur für Teilnehmerstationen möglich ist, welche sich innerhalb des Zuges TRAIN befinden. Betritt der Nutzer der Teilnehmerstation MS_STATION daher den Zug TRAIN nicht, so ist ein Handover von der stationären Basisstation BS_STATION zu der mobilen Basisstation BS_TRAIN nicht möglich, dies gilt auch für die "cell re-selection". Vielmehr kann aufgrund des hohen Grenzwertes ein Handover von der stationären Basisstation BS_STATION zu der mobilen Basisstation BS_TRAIN nur in dem Fall durchgeführt werden, dass der Nutzer der Teilnehmerstation MS_STATION in den Zug TRAIN eingestiegen ist, da außerhalb des Zuges TRAIN die Empfangsstärke von Signalen der stationären Basisstation BS_STATION aufgrund der Abschirmung der Funkstrahlung durch den Zug TRAIN zu niedrig ist.

Während bislang der Fall beschrieben wurde, dass in dem Zug TRAIN lediglich die mobile Basisstation BS_TRAIN installiert ist, können auch weitergehende Bestandteile des Infrastrukturnetzes des Funkkommunikationssystem sich an Bord des Zuges TRAIN befinden. Bezüglich GSM kann sich z.B. auch eine BSC (Base Station Controller) und bezüglich UMTS ein RNC (Radio Network Controller) innerhalb des Zuges TRAIN befinden. Die Anbindung des beweglichen, sich innerhalb der Zuges TRAIN befindlichen Teils des Infrastrukturnetzes an den stationären Teil kann z.B. über eine Antenne erfolgen, welche zwischen den Gleisen angebracht ist und über eine weiter Antenne, welche sich unterhalb des Zuges befindet und mit dem beweglichen Teil des Infrastrukturnetzes per Funk oder über Leitung verbunden ist.

Die Erfindung weist den Vorteil auf, dass Gesprächsabbrüche für Teilnehmer, welche während eines Gesprächs in einen Zug steigen oder einen Zug verlassen, reduziert werden können. Dadurch, dass den Teilnehmerstationen rechtzeitig die relevanten Funkzellen außerhalb des Zuges bzw. bei Teilnehmern am Bahnhof die Funkzelle innerhalb des Zuges bekannt gegeben wird, kann der Handover-Vorgang frühzeitig vorbereitet und durchgeführt werden.

Die Erfindung kann neben dem beschriebenen Beispiel einer sich in einem Zug befindlichen Basisstation auch auf andere bewegbare Basisstationen angewandet werden, wie z.B. Basisstationen in Flugzeugen, Schiffen, Straßenfahrzeugen. Besonders vorteilhaft sind hierbei Anbringungen von Basisstationen in Transportmittel, bei welchen ein Ein- und Aussteigen von Teilnehmerstationen häufig, insbesondere an vorbestimmten Orten, stattfindet.

Die mobile und die stationäre Basisstation können auch Bestandteile unterschiedlicher Funkkommunikationssysteme sein, wobei sich die Systeme z.B. durch verschiedene Betreiber, Funkabdeckungsbereiche oder Funktechnologien unterscheiden können. Beispielsweise kann es sich bei der stationären Basisstation um einen Funkzugangspunkt eines WLAN handeln, so dass den Teilnehmern der mobilen Basisstation -unabhängig oder abhängig vom Bewegungszustand der mobilen Basisstationdann, wenn die mobile Basisstation in den Funkabdeckungsbereich des WLAN gelangt, ein Wechsel von dem System der mobilen Basisstation zum WLAN oder eine zusätzliche Kommunikation mit dem WLAN zur Kommunikation mit dem System der mobilen Basisstation ermöglicht wird.

## Patentansprüche

1. Verfahren zur Kommunikation per Funk,
bei dem eine netzseitige Funkstation (BS_TRAIN) an einer Transport-Einrichtung (TRAIN) angebracht ist und mit sich innerhalb der Transport-Einrichtung (TRAIN) befindlichen teilnehmerseitigen Funkstationen (MS_TRAIN) kommuniziert,
**dadurch gekennzeichnet,**
**dass** die netzseitige Funkstation (BS_TRAIN) Informationen über andere netzseitige Funkstationen (BS_STATION) und/oder Funkzellen ausstrahlt bei Zutreffen von einem Kriterium hinsichtlich mindestens einem sich mit der Zeit ändernden Zustand der Transport-Einrichtung (TRAIN) und/oder hinsichtlich der Zeit,
und die Informationen nicht ausstrahlt bei Nicht-Zutreffen des Kriteriums.

2. Verfahren zur Kommunikation per Funk,
bei dem eine netzseitige Funkstation (BS_STATION) mit teilnehmerseitigen Funkstationen (MS_STATION) kommuniziert,
**dadurch gekennzeichnet,**
**dass** die netzseitige Funkstation (BS_STATION) Informationen über eine an einer Transport-Einrichtung (TRAIN) angebrachte netzseitige Funkstation (BS_TRAIN) oder deren Funkzelle ausstrahlt bei Zutreffen von einem Kriterium hinsichtlich mindestens einem sich mit der Zeit ändernden Zustand der Transport-Einrichtung (TRAIN) und/oder hinsichtlich der Zeit,
und die Informationen nicht ausstrahlt bei Nicht-Zutreffen des Kriteriums.

3. Verfahren nach Anspruch 1 oder 2,
**dadurch gekennzeichnet,**
**dass** es sich bei einem sich mit der Zeit ändernden Zustand der Transport-Einrichtung (TRAIN) um den aktuellen Aufenthaltsort (x, x_STATION) der Transport-Einrichtung (TRAIN) handelt.

4. Verfahren nach einem der Ansprüche 1 bis 3,
**dadurch gekennzeichnet,**
**dass** es sich bei einem sich mit der Zeit ändernden Zustand der Transport-Einrichtung (TRAIN) um den Bewegungszustand der Transport-Einrichtung (TRAIN) handelt.

5. Verfahren nach einem der Ansprüche 1 bis 4,
**dadurch gekennzeichnet,**
**dass** es sich bei einem sich mit der Zeit ändernden Zustand der Transport-Einrichtung (TRAIN) um die Öffnung von mindestens einem Ein- und/oder Ausgang der Transport-Einrichtung (TRAIN) handelt.

6. Verfahren nach einem der Ansprüche 1 oder 3 bis 5, **dadurch gekennzeichnet,**
**dass** der Inhalt der Informationen über andere netzseitige Funkstationen (BS_STATION) und/oder Funkzellen von dem aktuellen Aufenthaltsort (x, x_STATION) der Transport-Einrichtung (TRAIN) abhängt.

7. Verfahren nach einem der Ansprüche 1 oder 3 bis 6,
**dadurch gekennzeichnet,**
**dass** die an der Transport-Einrichtung (TRAIN) angebrachte netzseitige Funkstation (BS_TRAIN) teilnehmerseitige Funkstationen (MS_TRAIN) auffordert, Messungen an Funkressourcen von durch die Informationen indizierten anderen netzseitige Funkstationen (BS_STATION) und/oder Funkzellen durchzuführen.

8. Verfahren nach einem der Ansprüche 2 bis 5,
**dadurch gekennzeichnet,**
**dass** die andere netzseitige Funkstation (BS_STATION) teilnehmerseitige Funkstationen (MS_STATION) auffordert, Messungen an Funkressourcen der an der Transport-Einrichtung (TRAIN) angebrachten netzseitigen Funkstation (BS_TRAIN) durchzuführen.

9. Verfahren nach einem der Ansprüche 1 bis 8,
**dadurch gekennzeichnet,**
**dass** die ausgestrahlten Informationen in einer von netzseitigen Funkstationen (BS_TRAIN, BS_STATION) üblicherweise zu Zellwechsel-Zwecken ausgestrahlten Nachbarzell-Liste enthalten sind.

10. Netzseitige Einrichtung für ein Funkkommunikationssystem, umfassend eine Funkeinrichtung (BS_TRAIN), welche an einer Transport-Einrichtung (TRAIN) angebracht ist, mit Mitteln zum Kommunizieren mit sich innerhalb der Transport-Einrichtung (TRAIN) befindlichen teilnehmerseitigen Funkstationen (MS_TRAIN),
**gekennzeichnet durch**
Mittel zum Überprüfen, ob ein Kriterium hinsichtlich mindestens einem sich mit der Zeit ändernden Zustand der Transport-Einrichtung (TRAIN) und/oder hinsichtlich der Zeit erfüllt ist, und
Mittel zum Ausstrahlen von Informationen über andere netzseitige Funkstationen (BS_STATION) und/oder Funkzellen unter der Voraussetzung, dass das Kriterium erfüllt ist.

11. Netzseitige Einrichtung für ein Funkkommunikationssystem, umfassend eine Funkeinrichtung (BS_STATION) mit Mitteln zum Kommunizieren mit teilnehmerseitigen Funkstationen (MS_STATION),
**gekennzeichnet durch**
Mittel zum Überprüfen, ob ein Kriterium hinsichtlich mindestens einem sich mit der Zeit ändernden Zustand einer Transport-Einrichtung (TRAIN) und/oder hinsichtlich der Zeit erfüllt ist, und
Mittel zum Ausstrahlen von Informationen über eine an der Transport-Einrichtung (TRAIN) angebrachte netzseitige Funkstation (BS_TRAIN) oder deren Funkzelle unter der Voraussetzung, dass das Kriterium erfüllt ist.
